# EUROPÄISCHE PATENTSCHRIFT

(11) **EP 1 293 115 B1**
(45) Veröffentlichungstag und Bekanntmachung des Hinweises auf die Patenterteilung: **09.07.2008**
(21) Anmeldenummer: 02018695.3
(22) Anmeldetag: 21.08.2002
(51) Int. Cl.: A01C 23/00

(54) **Gezogene landwirtschaftliche Verteilmaschine**
Drawn agricultural distributing machine
Distributeur agricole tracté

(30) Priorität: 30.08.2001 DE 10142533
(43) Veröffentlichungstag der Anmeldung: 19.03.2003
(73) Patentinhaber: Amazonen-Werke H. Dreyer GmbH & Co. KG, 49205 Hasbergen (DE)
(72) Erfinder: Ehlen, Volker, 04229 Leipzig (DE)

(56) Entgegenhaltungen:
- DE-A- 3 212 621
- FR-A- 2 765 772
- GB-A- 2 050 132
- GB-A- 2 169 782
- US-A1- 2001 022 322

## Beschreibung

Die Erfindung betrifft eine landwirtschaftliche Verteilmaschine gemäß des Oberbegriffes des Patentanspruches 1, wie aus GB-A-2 169 782 bekannt.

Eine derartige Verteilmaschine ist in der Praxis bekannt. Nachteilig ist bei diesen Verteilmaschinen, insbesondere wenn sie als Feldspritzen ausgebildet sind, dass der Schwerpunkt, insbesondere bei gefülltem Vorratstank relativ hoch liegt. Insbesondere bei Kurvenfahrt besteht eine große Kippgefahr.

Der Erfindung liegt die Aufgabe zugrunde, mit einfachen Mitteln die Voraussetzungen dafür zu schaffen, dass insbesondere bei der Transportfahrt der Schwerpunkt der Verteilmaschine abgesenkt werden kann.

Diese Aufgabe wird erfindungsgemäß durch die kennzeichnenden Merkmale des Patentanspruches 1 gelöst. Infolge dieser Maßnahmen kann die Feldspritze im vorderen Bereich abgesenkt werden, so dass der Schwerpunkt während der Transportfahrt relativ niedrig liegt, während die im vorderen Bereich Feldspritze über die Verstelleinrichtung zu der Ausbringarbeit angehoben werden kann, so dass eine große Bodenfreiheit unterhalb der Verteilmaschine geschaffen wird.

Um eine gute Fahreigenschaft der Verteilmaschine während der Transportfahrt und auf dem Acker zu erreichen, ist vorgesehen, dass dem Hydraulikzylinder Feder- und/oder Dämpfungselemente zugeordnet sind. Diese Feder- und Dämpfungselemente können beispielsweise als Stickstoffblase ausgebildet sein.

Des weiteren ist vorgesehen, dass das Verteilergestänge mittels eines Tragarmes in Höhenrichtung verstellbar am Rahmen angeordnet ist und das Verteilergestänge gegenüber dem Tragarm mittels einer Verstelleinrichtung um eine quer zur Fahrtrichtung verlaufende horizontale Achse verschwenkbar ist, und dass die Verstelleinrichtung der Deichsel mit der Verstelleinrichtung des Verteilergestänges gekoppelt ist. Infolge dieser Maßnahmen kann das Verteilergestänge, auch wenn die Feldspritze im vorderen Bereich abgesenkt ist, in eine Stellung gebracht werden, so dass es in vertikaler Ebene ausgerichtet ist.

Weitere Einzelheiten der Erfindung sind den übrigen Unteransprüche, der Beispielsbeschreibung und den Zeichnungen zu entnehmen. Hierbei zeigen
- Fig. 1: die Feldspritze mit abgesenktem vorderen Bereich in Seitenansicht und Prinzipdarstellung,
- Fig. 2: die Feldspritze im vorderen Bereich angehoben zur Transportfahrt und,

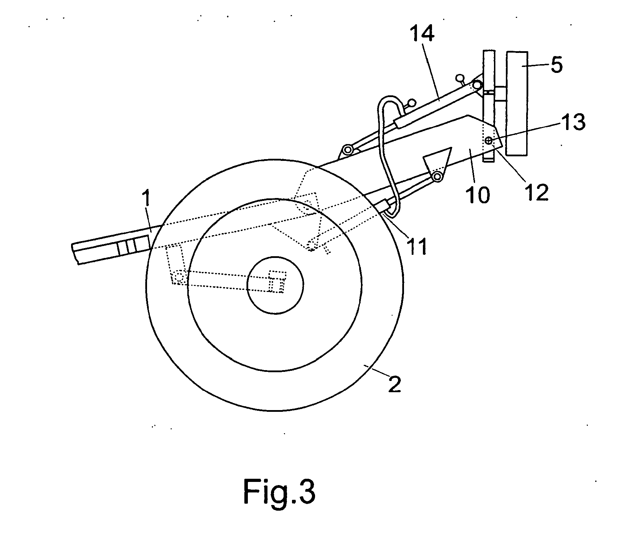

- Fig. 3: die Anbringung des Verteilergestänges an dem Rahmen der Feldspritze.

Eine landwirtschaftliche Feldspritze weist den Rahmen 1, das Fahrwerk 2, die Zugdeichsel 3, den Vorratstank 4 und die als Verteilergestänge 5 ausgebildete Ausbringeinrichtung auf, über welche das sich im Vorratsbehälter 4 befindliche Material über Dosier- und Ausbringvorrichtungen in einstellbaren Mengen verteilbar ist. Die Zugdeichsel 3 ist mittels des Gelenkes 6 an dem Rahmen 1 angeordnet. Die Gelenkachse 7 des Gelenkes 6 verläuft horizontal und quer zur Fahrtrichtung 8, so dass die Deichsel 3 in aufrechter Ebene bewegbar ist. Zwischen dem Tragrahmen 1 und der Deichsel ist die als doppelwirkender Hydraulikzylinder 9 ausgebildete Verstelleinrichtung angeordnet, mittels welcher die Zugdeichsel 3 gegenüber dem Rahmen 1 in aufrechter Ebene zu verschwenken ist. Dem Hydraulikzylinder 9 sind nicht dargestellte Feder- und Dämpfungselemente in Form beispielsweise einer Stickstoffblase zugeordnet.

Das Verteilergestänge 5 ist mittels des Tragarmes 10 in Höhenrichtung verstellbar am Rahmen 1 angeordnet. Zwischen dem Rahmen 1 und dem Tragarm 10 ist der Hydraulikzylinder 11 angeordnet, mittels welchem das Verteilergestänge anzuheben oder abzusenken ist. Das Verteilergestänge 5 ist an dem Tragarm 10 mittels des Gelenkes 12, deren Gelenkachse 13 quer zur Fahrtrichtung 8 verläuft, verschwenkbar angeordnet. Zwischen dem Verteilergestänge 5 und dem Tragarm 10 befindet sich die als doppeltwirkender Hydraulikzylinder 14, ausgebildete Verstelleinrichtung. Der Hydraulikzylinder 14 der zwischen dem Tragarm 10 und dem Verteilergestänge 5angeordnet ist, und der Hydraulikzylinder 9, der zwischen dem Rahmen 1 und der Deichsel 3 angeordnet ist, sind über Hydraulikleitungen miteinander gekoppelt, so dass dann, wenn die Feldspritze im vorderen Bereich abgesenkt bzw. angehoben wird, das Verteilergestänge 5 automatisch in eine Stellung gebracht wird, so dass es in vertikaler Ebene ausgerichtet ist.

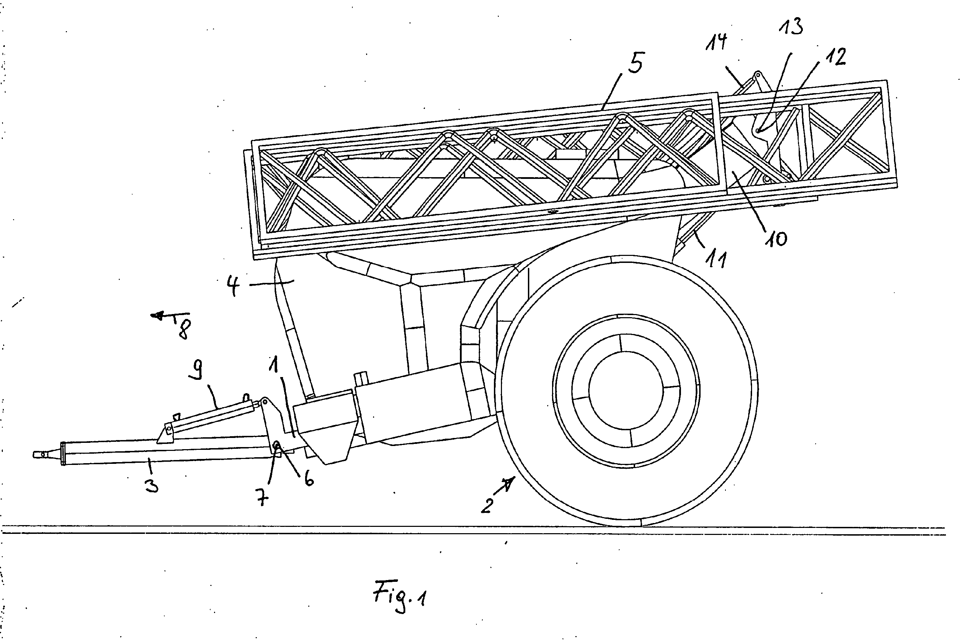

Um die Feldspritze sicher auf Straßen und Wegen ohne eine große Kippgefahr transportieren zu können, wird die Feldspritze im vorderen Bereich abgesenkt, wie dies Fig. 1 zeigt. Hierzu wird mittels geeigneter Stellmittel der Hydraulikzylinder 9 betätigt, so dass der Hydraulikzylinder 9 eingefahren wird. Hierdurch wird die Feldspritze im vorderen Bereich abgesenkt. Hierdurch ergibt sich eine günstige niedrige Schwerpunktlage.

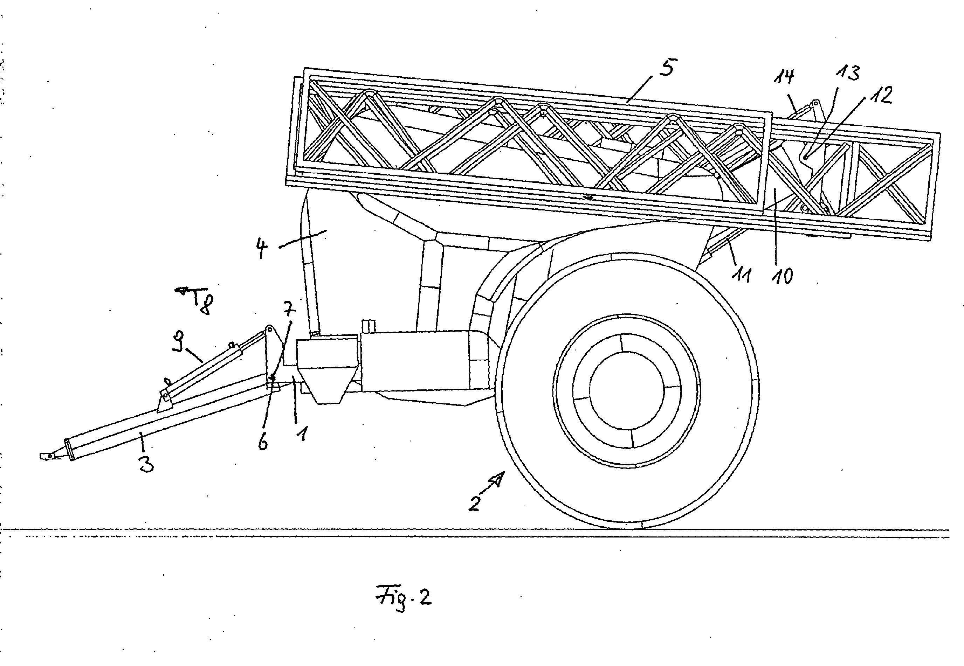

Um für die Feldspritze während der Ausbringarbeit eine relativ große Bodenfreiheit zu erreichen, wird die Feldspritze für die Ausbringarbeit im vorderen Bereich angehoben, wie dieses die Fig. 2 zeigt. Hierzu wird über geeignete Einstellmittel der Hydraulikzylinder 9 entsprechend mit Druck beaufschlagt, so dass er ausfährt und den vorderen Punkt der Zugdeichsel 3 nach unten drückt und gleichzeitig die Feldspritze im vorderen Bereich anhebt. Durch die entsprechende Kopplung mit dem Hydraulikzylinders 14, der zwischen dem Verteilergestänge 5 und dem Tragarm angeordnet ist, lässt sich erreichen, dass für die Ausbringarbeit das Verteilergestänge 3 sich in horizontaler Lage befindet.

Es ist jedoch auch möglich, die beiden Hydraulikzylinder 9 und 14 nicht miteinander zu koppeln, sondern sowohl für den Hydraulikzylinder 9, der zwischen der Zugdeichsel 3 und dem Rahmen 1 angeordnet ist, wie auch für den Hydraulikzylinder 14, der zwischen dem Verteilergestänge 5 und dem Tragarm 10 angeordnet ist, jeweils eigene Einstellmittel vorzusehen, um die Hydraulikzylinder 9 und 14 jeweils unabhängig voneinander entsprechend durch Druckbeaufschlagung verstellen zu können.

## Patentansprüche

1. Gezogene landwirtschaftliche Feldspritze mit einem Rahmen, einem Fahrwerk, einer Zugdeichsel, Vorratstank und einer anheb- und absenkbaren als Verteilergestänge ausgebildeten Ausbringeinrichtung zum Verteilen des im Vorratsbehälter befindlichen Materiales über Dosier- und Ausbringeinrichtungen in einstellbaren Mengen, **dadurch gekennzeichnet, dass** die Deichsel (3) an dem Tragrahmen (1) mittels eines Gelenkes (6), dessen Gelenkachse (7) quer zur Fahrtrichtung (8) verläuft, angeordnet ist, dass zwischen dem Tragrahmen (1) und der Deichsel (3) eine Verstelleinrichtung (9) angeordnet ist, mittels welcher die Deichsel (3) in aufrechter Ebene zu verschwenken ist, dass das Verteilergestänge (5) um eine quer zur Fahrtrichtung (8) verlaufende Achse (13) mittels Einstellelementen (14) verschwenkbar ist, dass die Verstelleinrichtung (9) der Deichsel (3) mit der Verstelleinrichtung (14) des Verteilergestänges (5) gekoppelt ist.

2. Verteilmaschine nach Anspruch 1, **dadurch gekennzeichnet, dass** die Verstelleinrichtung (9) als Hydraulikzylinder ausgebildet ist.

3. Verteilmaschine nach Anspruch 1, **dadurch gekennzeichnet, dass** das Verteilergestänge (5) mittels eines Tragarmes (10) in Höhenrichtung verstellbar am Rahmen (1) angeordnet ist und das Verteilergestänge (5) gegenüber dem Tragarm (10) mittels einer Verstelleinrichtung (14) um eine quer zur Fahrtrichtung verlaufende horizontale Achse verschwenkbar ist.

4. Verteilmaschine nach Anspruch 2, **dadurch gekennzeichnet, dass** dem Hydraulikzylinder (9) Feder- und/oder Dämpfungselemente zugeordnet sind.

## Claims

1. Drawn agricultural spraying machine including a frame, a framework, a drawbar, hopper and a raisable and lowerable discharging device in the form of a distributor boom for distributing the material situated in the hopper in adjustable quantities via metering and discharging devices, **characterised in that** the shaft (3) is disposed on the supporting frame (1) by means of a pivot joint (6), the pivotal axis (7) of which extends transversely relative to the direction of travel (8), **in that** an adjusting device (9) is disposed between the supporting frame (1) and the shaft (3), by means of which adjusting device the shaft (3) can be pivoted into an upright plane, **in that** the distributor boom (5) is pivotable about an axis (13) that extends transversely relative to the direction of travel (8) by means of adjusting members (14), **in that** the adjusting device (9) of the shaft (3) is coupled to the adjusting device (14) of the distributor boom (5).

2. Distributor according to claim 1, **characterised in that** the adjusting device (9) is in the form of a hydraulic cylinder.

3. Distributor according to claim 1, **characterised in that** the distributor boom (5) is disposed on the frame (1) so as to be adjustable upwards by means of a support arm (10) and the distributor boom (5) is pivotable relative to the support arm (10) about a horizontal axis that extends transversely relative to the direction of travel by means of an adjusting device (14).

4. Distributor according to claim 2, **characterised in that** resilient and/or damping members are associated with the hydraulic cylinder (9).

## Revendications

1. Pulvérisateur agricole tracté comportant un cadre, un châssis, un timon, un réservoir d'alimentation ainsi qu'une installation d'épandage réalisée sous la forme d'un mât de distribution susceptible d'être relevé et abaissé, pour distribuer les produits du réservoir par des installations de dosage et de distribution, selon des quantités réglées,
**caractérisé en ce que**
le timon (3) est relié au cadre support (1) par l'intermédiaire d'une articulation (6) dont l'axe (7) est dirigé transversalement à la direction de déplacement (8),
une installation d'actionnement (9) est prévue entre le cadre de support (1) et le timon (3), installation à l'aide de laquelle le timon (3) peut être basculé dans un plan vertical,
**caractérisé en ce que**
le mât de distribution (5) est pivotant autour d'un axe (13) transversal à la direction de déplacement (8) par l'intermédiaire d'éléments de réglage (14),
l'installation de réglage (9) du timon (3) est couplée à l'installation de réglage (14) du mât de distribution (5).

2. Distributeur selon la revendication 1,
**caractérisé en ce que**
l'installation d'actionnement (9) est un vérin hydraulique.

3. Distributeur selon la revendication 1,
**caractérisé en ce que**
le mât de distribution (5) est monté de manière réglable en hauteur sur le cadre (1) par l'intermédiaire d'un bras (10) et le mât de distribution (5) peut être pivoté par rapport au bras de support (10) à l'aide d'une installation de réglage (14) autour d'un axe horizontal dirigé transversalement à la direction de déplacement.

4. Distributeur selon la revendication 2,
**caractérisé en ce que**
le vérin hydraulique (9) comporte des éléments à ressort et/ou des éléments d'amortissement.
